# EUROPEAN PATENT APPLICATION

(11) **EP 2 151 159 A2**
(43) Date of publication of application: **10.02.2010**
(21) Application number: 09167451.5
(22) Date of filing: 07.08.2009
(51) Int. Cl.: A01K 5/00

(54) **An apparatus for mixing and dispensing material, especially animal feed**

(30) Priority: 08.08.2008 DK 200801081
(71) Applicant: JF-Fabriken - J. Freudendahl A/S, 6400 Sonderborg (DK)
(72) Inventor: Pedersen, Ove, DK-6200, Aabenraa (DK)
(74) Representative: Joergensen, Bjoern Barker

(57) **Abstract**

An apparatus for mixing and dispensing material, especially animal feed, comprises a discharge opening and a guard (26) covering the discharge opening from above. The guard comprises a flexible sheet (27) and at least one stiffening element (29). The apparatus comprises an abutment (33) restricting a movement of the at least one stiffening element (29) in a direction away from the discharge opening.

## Description

The present invention relates to an apparatus for mixing and dispensing material, especially animal feed, said apparatus comprising a discharge opening and a guard covering the discharge opening from above, the guard comprising a flexible sheet and at least one stiffening element.

Apparatuses for mixing and dispensing animal feed through a discharge opening covered by a guard are known e.g. from EP 1 068 797, wherein the guard comprise a rigid shield which by means of an actuating device is moved to an open position prior to dispensing material. The apparatus comprises a closing member for opening and closing the discharge opening and the opening movement of the guard is coordinated with the opening movement of the closing member. The apparatus is provided with ground engaging wheels to allow the apparatus to be pulled along a line of troughs e.g. in an animal house for dispensing feed into the troughs.

A problem with a rigid shield is that in the open position it is extending from the apparatus and risks collision with constructional elements between troughs. Such collision may deform and wreck the rigid shield.

One known way of avoiding this problem is to provide a flexible guard instead of a rigid shield. In case of collision with a fixed structure, such as a constructional element, a flexible guard may deform yieldingly and pass the fixed structure without being wrecked but to resume its original shape after passing.

A flexible guard may be flexibly pushed aside by feed exiting the discharge opening and thus it need not be actively moved to an open position like a rigid shield.

However guards of the kind in question are subject to safety regulations and the known flexible guards seem not to fulfil the present safety rules.

The object of the present invention is to provide a more safe flexible guard for an apparatus for mixing and dispensing animal feed.

This is fulfilled by providing in an apparatus as mentioned by way of introduction with an abutment restricting a movement of the at least one stiffening element in a direction away from the discharge opening. Such an abutment prevents that the flexible sheet is lifted, e.g. by an operator, to gain access to the discharge opening, thus enhancing the safety of the apparatus.

The flexible sheet is normally fastened to a fixed part of the apparatus above the discharge opening and normally it is also fastened to fixed parts of the apparatus along sides of the discharge opening while at the bottom of the discharge opening the feed is free to be dispensed the flexible sheet having a lower free edge. The stiffening element or elements are usually formed as slats attached to the flexible sheet. The stiffening elements usually extend from an upper part of the flexible sheet to a lower part of the flexible sheet to prevent the flexible sheet from being folded about horizontal lines to raise the lower edge. Also the stiffening slats may provide for the guard to fulfil a regulatory requirement that a horizontal force of 500 N on the guard must not bring the guard in contact with mixing and/or chopping devices inside the apparatus. Normally the stiffening elements extend from the vicinity of the fastening above the discharge opening and towards the lower free edge of the flexible sheet. The stiffening elements preferably allow the flexible sheet to fold about vertical lines to allow a part of the flexible sheet to flex away from the discharge opening to allow feed to exit through a corresponding part of the discharge opening.

Preferably the abutment does not permit the lower free edge of the flexible sheet or the lower end(s) of the stiffening element(s) to be raised to a position above the lower level of any mixing or chopping device inside the apparatus. The abutment will always keep the mayor part of the guard below the upper limitation of the discharge opening.

The abutment is preferably movable between a defined open position and a closed position. In the defined open position the abutment restricts the movement of the stiffening element(s) and in the closed position the abutment may avoid to be extending from the apparatus.

The abutment may be freely movable between the defined open position and the closed position during dispensing of material.

A driver may be present for moving the abutment to the closed position. Thus the abutment may be put in the closed position to prevent the flexible sheet from flapping when feed is not to be dispensed.

In a practical embodiment the abutment is rotatable around an axis. Thus the abutment may be provided by a hinged element.

The apparatus preferably comprises a closing member movable between a open position and a closed position for respectively opening and closing the discharge opening. In this case the driver may be attached to the closing member to be movable together with it. Thus when the discharge opening is closed to stop the dispensing of feed the abutment is automatically moved to its closed position to prevent the flexible sheet from flapping.

Preferably in an open position of the abutment the flexible sheet hangs freely movable.

Preferably the apparatus comprises ground engaging wheels for allowing the apparatus to be driven around.

The flexible sheet is preferably made of an elastomeric material or rubber. In the alternative e.g. tarpaulin cloth may be used.

Preferably the apparatus comprises a mixing compartment containing a mixing device for mixing the feed.

The invention will be explained in further detail in the following by means of an example of an embodiment with reference to the schematic drawing, in which
Fig. 1 is a perspective view of a front part of an apparatus according to the invention,
Fig. 2 is a side view of a part of the apparatus according the invention,
Fig. 3 is a section along line III-III in Fig. 2, and
Fig.4 is a perspective view corresponding to Fig. 1, but with a guard in an open position.

An apparatus according to the present invention is shown in the figures and comprises a container with a side wall 1 and a bottom 2. Below the container the apparatus comprises an undercarriage 4 with ground engaging wheels 3 of which only one is visible in the figures, and a tongue 5 for hitching the apparatus to a tractor to be towed by it. Inside the container a mixing element 7 is present. The mixing element 7 of which only a part is shown is rotatable around a vertical axis. Inside the container the mixing element 7, which is also known as a vertical auger, may shred and chop bales of hay or silage and mix the straw fodder thus chopped with other types of feed.

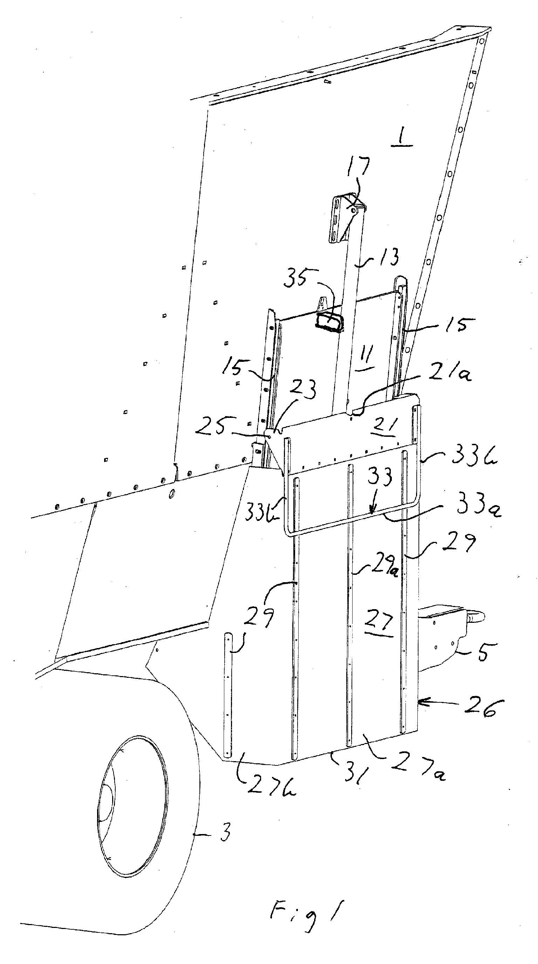

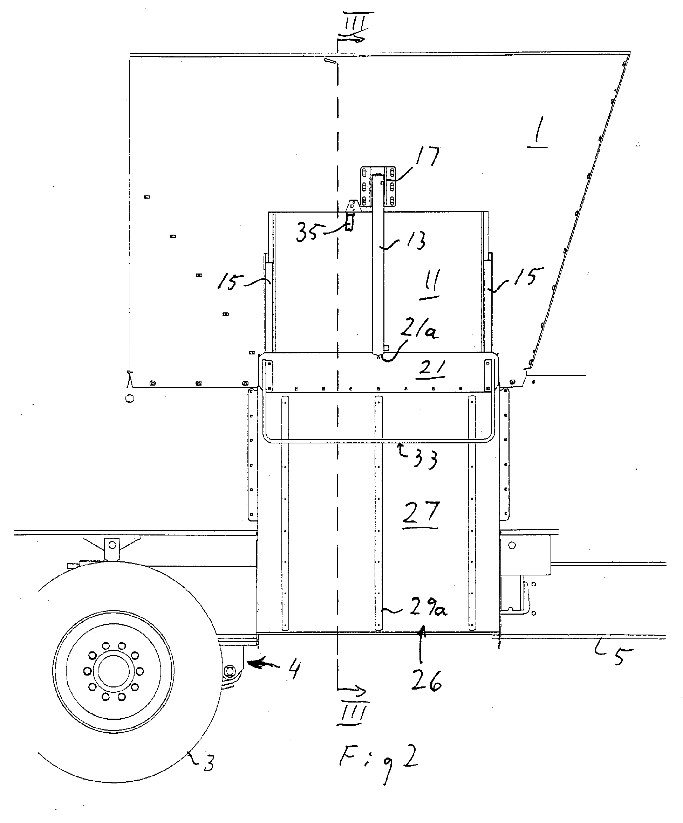

In the side wall 1 a discharge opening 9 is present for allowing feed mixed in the container by means of the mixing element 7 to be dispensed. The discharge opening 9 is provided with a generally flat closing member 11, which is vertically (as seen in Fig. 2) shiftable by means of a hydraulic cylinder 13 between an upper open position shown in the Figs. 2-4 and a lower closed position not shown. Fig. 1 shows the closing member 11 in an intermediate position. Thus the closing member 11 is held by guideways 15 at the lateral sides of the discharge opening 9. The hydraulic cylinder 13 is attached at one end to a bracket 17 mounted on the side wall 1, and a piston rod 18 of the hydraulic cylinder 13 is attached to a second bracket 19 positioned on the lower part of the closing member 11.

Spanning the width of the discharge opening a guard carrier 21 is mounted above the discharge opening 9. The guard carrier 21 is a flat member with folded-up lobes 23 at its ends, and through said lobes 23 the guard carrier 21 is attached by bolts 25 to elements fixed to the side wall to be able to rotate around a horizontal axis defined by the bolts 25, of which only one is seen in the figures. The guard carrier 21 has an upper edge with a central notch 21a. A guard 26 comprising a flexible sheet or rubber curtain 27 is attached to the guard carrier 21 to hang down in front of the discharge opening 9. The rubber curtain is provided with stiffening elements in the form of rigid slats 29 extending from the vicinity of the guard carrier 21 to a lower edge 31 of the rubber curtain. By preventing the rubber curtain to fold about horizontal lines these slats 29 prevent the rubber curtain from being pressed into the discharge opening to get in contact with the mixing element 7. Still the rigid slats 29 allow the rubber curtain 27 to flap and rotate in relation to the guard carrier 21 due to the flexibility of the rubber curtain, and the rigid slats 29 allow the rubber curtain 27 to fold about vertical lines or lines running between the rigid slats 29.

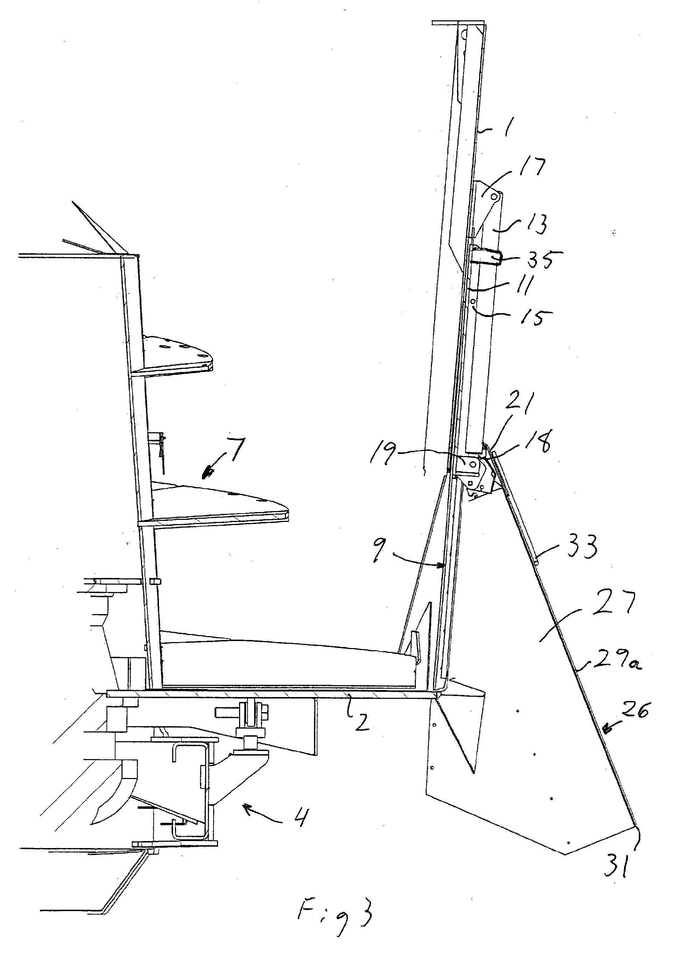

The rubber curtain 27 prevents for safety reasons access to the interior of the container and the mixing device 7 therein. To effectively prevent such access the rubber curtain is apart from being attached to the guard carrier 21 also attached to the side wall 1 of the container along the lateral sides of the discharge opening. Thus the rubber curtain 27 comprises a central part 27a extending in front of the discharge opening 9 and folded side parts 27b expending between the central part 27a and the side wall 1 at the lateral sides of the discharge opening 9. The side parts 27b of the rubber curtain are sufficiently large to allow the central part 27a to rotate around the horizontal axis defined by the bolts 25 to an open position e.g. shown in Fig. 3. The side parts 27b will fold to allow the central part 27a to assume a more or less closed position as shown e.g. in Fig. 1.

An abutment bar 33 is attached to the guard carrier 21 and has a central portion 33a extending across the central part 27a of the rubber curtain 27 and its rigid slats. Thus the central portion of the abutment bar 33 is placed at a distance from the guard carrier and the attachment of the rubber curtain. End portions 33b of the abutment bar are bend relative to the central portion 33a to be rigidly attached to the guard carrier. In the embodiment shown the central portion 33a of the abutment bar 33 is straight and extends parallel to the guard carrier 21.

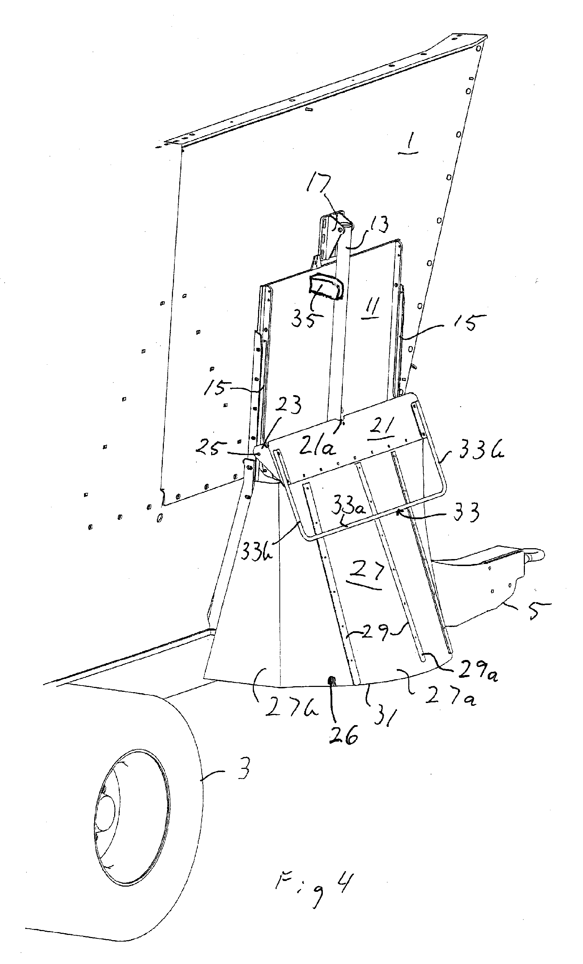

When the rubber curtain 27 or a part of its central part 27a is moved from a more or less closed hanging-down position as shown in Fig 1 to an open position as shown in Fig. 3 or Fig. 4, either by feed exiting through the discharge opening or by a person grapping the lower edge 31 of the rubber curtain, then one or more of the slats 29 will abut against the central portion of the abutment bar 33, which will be rotated together with the guard carrier 21 around the axis defined by the bolts 25. The guard carrier 21 will rotate until its upper edge at the notch 21a abuts against the hydraulic cylinder 13, which will prevent further rotation in the current direction. Thus further movement of the rubber curtain 27 and the respective rigid slat(s) 29 in the direction away from the discharge opening is likewise prevented.

As indicated in Fig. 4, if only a part of the rubber curtain, e.g. a part around a central slat 29a, is stressed in a direction away from the discharge opening, then the remaining parts of the rubber curtain may assume positions hanging down more vertically. Thus feed exiting through the discharge opening need not necessarily push away or lift the entire rubber curtain.

It is important according to the invention that the rubber curtain is prevented from being lifted to a position where its function as a safety device preventing access to the mixing device 7 inside the container is jeopardized.

The abutment bar may be configured in other ways than suggested above without leaving the scope of the present invention as defined in the claims, and other abutment elements than a bar may be used. The abutment element may be movable as described above or it may be fixed.

In the embodiment shown in the figures the abutment is utilised for a second purpose: A driver 35 is provided on the upper part of the closing member 11. When the closing member 11 is brought to its lower closing position the driver will abut against the upper edge of the guard carrier and rotate is in clockwise direction as seen in Fig. 3. Thereby the abutment bar and the rubber curtain will be brought to closing positions close to the side wall 1 of the container and the rubber curtain will be prevented from flapping.

## Claims

1. An apparatus for mixing and dispensing material, especially animal feed, said apparatus comprising a discharge opening (9) and a guard (26) covering the discharge opening from above, the guard comprising a flexible sheet (27) and at least one stiffening element (29), **characterized by** an abutment (33) restricting a movement of the at least one stiffening element (29) in a direction away from the discharge opening (9).

2. An apparatus according to claim 1, **characterized in that** the abutment (33) is movable between a defined open position and a closed position.

3. An apparatus according to claim 1 or claim 2, **characterized in that** the abutment (33) is freely movable between a defined open position and a closed position during dispensing of material.

4. An apparatus according to claim 2 or claim 3, **characterized by** a driver (35) for moving the abutment (33) to the closed position.

5. An apparatus according to any of claims 2 to 4, **characterized in that** the abutment (33) is rotatable around an axis (25).

6. An apparatus according to any of the claims 1 to 5, **characterized in that** the apparatus comprises a closing member (11) movable between a open position and a closed position for respectively opening and closing the discharge opening (9).

7. An apparatus according to claims 4 and 6, **characterized in that** the driver (35) is attached to the closing member (11) to be movable together with it.

8. An apparatus according to any of the preceding claims, **characterized in that** in an open position of the abutment (33a) the guard (26) hangs freely movable.

9. An apparatus according to any of the preceding claims, **characterized in that** the abutment comprises an element (33a) extending across the guard (26) on an outside thereof.

10. An apparatus according to any of the preceding claims, **characterized in that** the flexible sheet (27) is made of an elastomeric material or rubber.
